# EUROPEAN PATENT APPLICATION

(11) **EP 4 120 744 A1**
(43) Date of publication of application: **18.01.2023**
(21) Application number: 21783832.5
(22) Date of filing: 08.04.2021
(51) Int. Cl.: H04W 48/02, H04W 48/18, H04W 12/06, H04W 60/00

(54) **METHOD AND DEVICE FOR PROVIDING AUTHENTICATED NETWORK SLICE IN WIRELESS COMMUNICATION SYSTEM**

(30) Priority: 09.04.2020 KR 20200043661
(71) Applicant: Samsung Electronics Co., Ltd., Gyeonggi-do 16677 (KR)
(72) Inventor: LEE, Hoyeon, Suwon-si, Gyeonggi-do 16677 (KR)
(74) Representative: Gulde & Partner
(86) International application number: PCT/KR2021/004433
(87) International publication number: WO 2021/206476

(57) **Abstract**

Provided is a method including: receiving a request for one or more first network slices to be accessed by a terminal; receiving terminal subscription information including information about one or more third network slices subscribed as a default; identifying whether one or more second network slices subscribed by the terminal included in the one or more first network slices are an authentication procedure target; when all of the one or more second network slices are the authentication procedure target, adding all of the one or more second network slices to a pending network slice list; performing an authentication procedure based on at least one of the pending network slice list or the one or more third network slices; and determining, based on a result of the authentication procedure, one or more network slices available to the terminal.

## Description

### TECHNICAL FIELD

The disclosure relates to a method and apparatus for providing an authenticated network slice in a wireless communication system.

### BACKGROUND ART

To meet the increase in demand with respect to wireless data traffic after the commercialization of 4^{th} generation (4G) communication systems, considerable efforts have been made to develop pre-5^{th} generation (5G) communication systems or 5G communication systems. For this reason, 5G communication systems or pre-5G communication systems are called 'beyond 4G network communication systems' or 'post long-term evolution (LTE) systems'.

In order to achieve a high data rate, 5G communication systems are being developed to be implemented in a super-high frequency band (millimeter wave (mmWave)), e.g., a band of 60 GHz. In order to reduce propagation path loss of radio waves and increase a propagation distance of radio waves in millimeter wave frequency bands, in 5G communication systems, discussions are underway about technologies such as beamforming, massive multiple-input multiple-output (MIMO), full dimensional MIMO (FD-MIMO), array antenna, analog beamforming, and large-scale antenna.

In order to improve system networks for 5G communication systems, various technologies have been developed, e.g., evolved small cells, advanced small cells, cloud radio access networks (Cloud-RAN), ultra-dense networks, device-to-device communication (D2D), wireless backhaul, moving networks, cooperative communication, coordinated multi-points (CoMP), and received-interference cancellation. Also, for 5G communication systems, other technologies have been developed, e.g., hybrid frequency-shift keying (FSK) and quadrature amplitude modulation (QAM) (FQAM) and sliding window superposition coding (SWSC), which are advanced coding modulation (ACM) schemes, and filter bank multi carrier (FBMC), non-orthogonal multiple access (NOMA), and sparse code multiple access (SCMA), which are advanced access schemes.

The Internet has evolved from a human-based connection network, where humans create and consume information, to the Internet of things (loT), where distributed components, such as objects, exchange information with each other to process the information. Internet of Everything (loE) technology, which is a combination of loT technology and big data processing technology through connection with a cloud server, is also emerging. In order to implement the loT, technology elements such as sensing technology, wired/wireless communication and network infrastructure, service interface technology, and security technology are required, and thus technology for inter-object connection, such as sensor network, machine to machine (M2M) communication, or machine-type communication (MTC), has recently been studied.

In an loT environment, intelligent Internet technology (IT) services that collect and analyze data generated by connected objects and create new value in human life may be provided. IoT may be applied to a variety of areas, such as smart homes, smart buildings, smart cities, smart cars or connected cars, smart grid, health care, smart home appliances and advanced medical services through convergence and combination between existing Information Technologies (IT) and various industrial applications.

Various attempts have been made to apply 5G communication systems to loT networks. For example, technologies related to sensor networks, M2M communication, MTC, etc., are being implemented by using 5G communication technology including beam-forming, MIMO, array antennas, etc. The application of a cloud radio access network (RAN) as big data processing technology may also be considered as an example of convergence of 5G technology and loT technology.

As described above, with the development of a wireless communication system, a method for providing an authenticated network slice is required.

### DISCLOSURE

### TECHNICAL SOLUTION

Provided are a method and apparatus for providing an authenticated network slice in a wireless communication system.

### ADVANTAGEOUS EFFECTS

According to the disclosure, an authenticated network slice may be provided in a wireless communication system.

### DESCRIPTION OF DRAWINGS

FIG. 1 is a diagram showing a network structure of a 5^{th} generation (5G) system (5GS), according to an embodiment of the disclosure.
FIG. 2 is a sequence diagram showing a terminal registration procedure according to an embodiment of the disclosure.
FIG. 3 is a sequence diagram showing a reauthentication procedure according to an embodiment of the disclosure.
FIG. 4 is a diagram showing a configuration of a terminal, according to an embodiment of the disclosure.
FIG. 5 is a diagram showing a configuration of a network entity, according to an embodiment of the disclosure.

### MODE FOR INVENTION

Hereinafter, operation principles of the disclosure will be described with reference to accompanying drawings.

While describing the disclosure, detailed description of related well-known functions or configurations may be omitted when it is deemed that they may unnecessarily obscure the essence of the disclosure. Also, terms used below are defined in consideration of functions in the disclosure, and may have different meanings according to an intention of a user or operator, customs, or the like. Therefore, the terms used herein have to be defined based on the meaning of the terms together with the description throughout the specification.

For the same reasons, components may be exaggerated, omitted, or schematically illustrated in drawings for clarity. Also, the size of each component does not completely reflect the actual size. In the drawings, like reference numerals denote like elements.

The advantages and features of the disclosure and methods of achieving them will become apparent with reference to embodiments described in detail below with reference to the accompanying drawings. In this regard, the embodiments of the disclosure may have different forms and should not be construed as being limited to the descriptions set forth herein. Rather, these embodiments are provided so that the disclosure will be thorough and complete and will fully convey the concept of the disclosure to one of ordinary skill in the art, and the disclosure will only be defined by the appended claims. Throughout the specification, like reference numerals denote like elements.

Here, it will be understood that combinations of blocks in flowcharts or process flow diagrams may be performed by computer program instructions. Because these computer program instructions may be loaded into a processor of a general-purpose computer, special purpose computer, or other programmable data processing apparatus, the instructions, which are executed via the processor of the computer or other programmable data processing apparatus generate means for implementing the functions specified in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks shown in succession may in fact be executed substantially concurrently or the blocks may sometimes be executed in the reverse order, depending upon the functionality involved.

Here, the term "unit" used in the embodiments means a software component or hardware component such as a field-programmable gate array (FPGA) or an application-specific integrated circuit (ASIC), and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be divided into additional components and "units". Furthermore, the components and "units" may be embodied to reproduce one or more central processing units (CPUs) in a device or security multimedia card. Also, in the embodiments, the "unit" may include at least one processor.

Also, terms for identifying access nodes, terms denoting network entities, terms denoting messages, terms denoting interfaces between network entities, terms denoting various types of identification information, etc. used herein are exemplified for convenience of description. Thus, the terms used in the disclosure are not limited and other terms denoting targets having the same technical meanings may be used.

Hereinafter, for convenience of descriptions, the disclosure uses terms and names defined by the 3rd Generation Partnership Project Long Term Evolution (3GPP LTE) or 5^{th} generation (5G) standard. In particular, the disclosure may be applied to the 3GPP new radio (NR), i.e., the 5G mobile communication standard. However, the disclosure is not limited by such terms and names, and may be equally applied to systems conforming to other standards. In other words, while describing the embodiments of the disclosure in detail, a main target is a communication standard defined by 3GPP, but an important gist of the disclosure may be applied, with a slight modification, to other communication systems having a similar technical background, within a range not greatly departing from the scope of the disclosure, and the applicability would be determined by one of ordinary skill in the art.

Hereinafter, a base station is an entity that allocates resources to a terminal, and may be at least one of a gNode B (gNB), an eNode B (eNB), a Node B (NB), a wireless access unit, a BS controller, or a node on a network. In the disclosure, an evolved node B (eNB) will be used interchangeably with a next generation node B (gNB) for convenience of descriptions. In other words, a base station described as an eNB may also indicate a gNB. Alternatively, a base station described as a gNB may indicate an eNB. Alternatively, a node described as a base station may indicate an eNB or a gNB.

Examples of a terminal may include user equipment (UE), a mobile station (MS), a cellular phone, a smartphone, a computer, and a multimedia system capable of performing a communication function. Also, the term 'terminal' may indicate not only mobile phones, narrow band-Internet of things (NB-loT) devices, and sensors, but also other wireless communication devices. The disclosure is not limited to the above examples.

The term 'service' in the disclosure may be interchangeably used to indicate a specific communication device (or a network function (NF)) performing a request of another communication device (or an NF) (i.e., an NF service), a service provided by a mobile network operator (for example, a voice service, a text service, or a data service), and a service provided by an over-the-top (OTT) provider (for example, a messenger service or a game service).

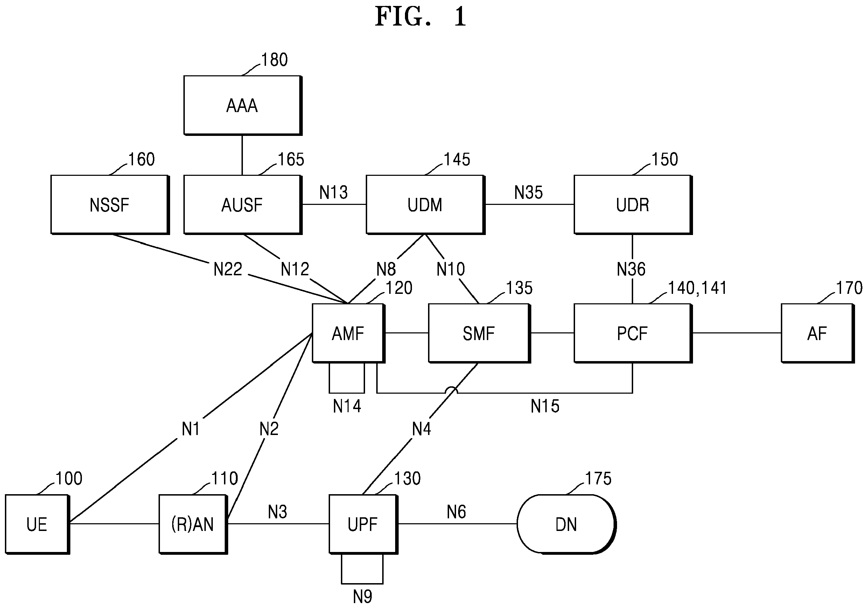

FIG. 1 is a diagram showing a network structure of a 5G system (5GS), according to an embodiment of the disclosure.

Referring to FIG. 1, a 5G core network (5GC) may include an access and mobility management function (AMF) 120, a session management function (SMF) 135, a user plane function (UPF) 130, policy control functions (PCFs) 140 and 141, unified data management (UDM) 145, a network slice selection function (NSSF) 160, an authentication server function (AUSF) 165, a unified data repository (UDR) 150, and authentication, authorization, and accounting (AAA) 180. A UE 100 may access the 5GC through a (radio) access network (R)AN 110. Hereinafter, the UE 100 may be referred to as a terminal 100, and the (R)AN 110 may be referred to as a base station 110. Also, the 5GC may further include an application function (AF) 170 and a data network (DN) 175.

The AMF 120 is an NF that manages a wireless network access and mobility regarding the terminal 100.

The SMF 135 is an NF that manages a session regarding the terminal 100, and session information includes quality of service (QoS) information, charging information, and information about packet processing.

The UPF 130 is an NF that processes user traffic (for example, user plane traffic), and is controlled by the SMF 135.

The PCFs 140 and 141 are NFs that manage an operator policy (PLMN policy) for providing a service in a wireless communication system. In addition, the PCFs may be classified into the PCF 140 that is in charge of an access and mobility (AM) policy and UE policy, and the PCF 141 that is in charge of a session management (SM) policy. The PCF 140 and the PCF 141 may be logically or physically separated NFs, or a logically or physically one NF.

The UDM 145 is an NF that stores and manages subscriber information (UE subscription) of the terminal 100.

The UDR 150 is an NF or database (DB) that stores and manages data.

The UDR 150 may store subscription information of the terminal 100, and provide the subscription information of the terminal 100 to the UDM 145. Also, the UDR 150 may store operator policy information and provide the operator policy information to the PCFs 140 and 141.

The NSSF 160 may be an NF that performs a function of selecting network slice instances servicing the terminal 100 or determining network slice selection assistance information (NSSAI).

The AUSF 165 may be an NF that performs a function for supporting authentication for 3GPP access and non-3GPP access.

A server of the AAA 180 may be a server that is in charge of network slice authentication. The server of AAA 180 may perform network slice authentication by being connected to the AUSF 165.

The AF 170 may be an NF that provides a function for a service according to the disclosure.

The DN 175 may denote a data network that may provide an operator service, an Internet access, or a 3^{rd} party service.

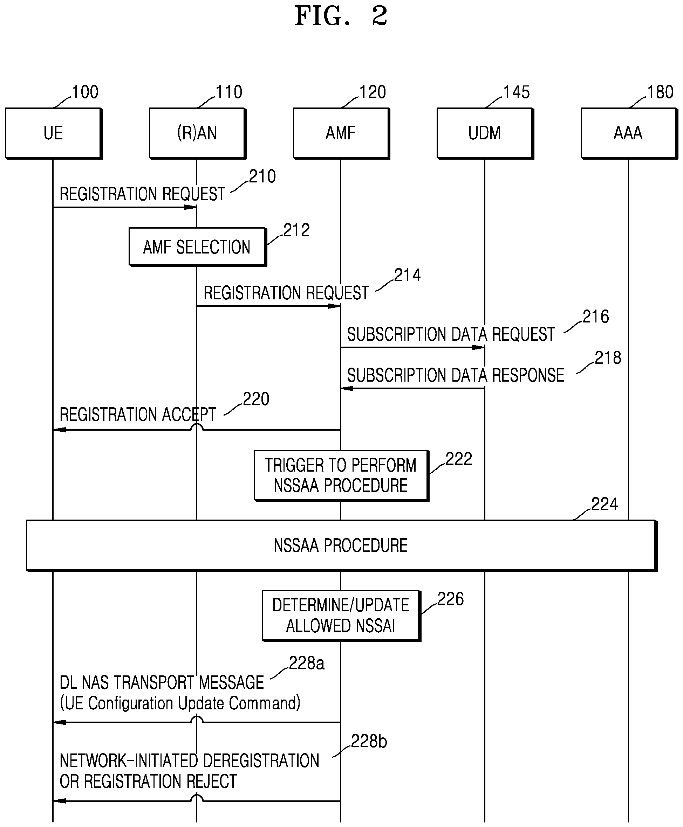

FIG. 2 is a sequence diagram showing a terminal registration procedure according to an embodiment of the disclosure.

Referring to FIG. 1, in operation 210, the terminal 100 may configure a registration request message and transmit the same to the base station 110. According to an embodiment, the registration request message may include requested NSSAI. The requested NSSAI may include information about a network slice to be accessed by the terminal. The requested NSSAI may include one or more pieces of single-network slice selection assistance information (S-NSSAI).

In operation 212, the base station 110 may select the AMF 120.

In operation 214, the base station 110 may transmit, to the selected AMF 120, the registration request message. The registration request message may include the requested NSSAI.

In operation 216, the AMF 120 may request the UDM 145 for terminal subscription information (subscription data).

In operation 218, the UDM 145 may transmit a response to the request for the terminal subscription information to the AMF 120. The terminal subscription information request response message may include subscription information. The subscription information may include pieces of S-NSSAI subscribed by the terminal 100, an indication indicating whether the S-NSSAI is default S-NSSAI, and an indication indicating whether the S-NSSAI is a network slice-specific authentication and authorization (NSSAA) target.

The AMF 120 may determine allowed NSSAI available to the terminal 100, based on the requested NSSAI received from the terminal 100 and the subscription information received from the UDM 145. For example, when all pieces of S-NSSAI included in the requested NSSAI are an NSSAA target, the AMF 120 may determine the allowed NSSAI as empty allowed NSSAI to indicate that there is no currently available NSSAI, and add the all pieces of S-NSSAI included in the requested NSSAI as pending NSSAI for performing an authentication procedure.

In operation 220, the AMF 120 may transmit a registration accept message to the terminal 100. The registration accept message may include the empty allowed NSSAI and the pending NSSAI.

In operation 222, the AMF 120 may start an NSSAA procedure for S-NSSAI included in the pending NSSAI. For example, the S-NSSAI included in the pending NSSAI may be S-NSSAI that is the NSSAA target from among pieces of S-NSSAI included in the requested NSSAI. Also, the AMF 120 may start the NSSAA procedure for S-NSSAI that is the NSSAA target from among pieces of default S-NSSAI. For example, the S-NSSAI that is the NSSAA target from among the pieces of default S-NSSAI may be S-NSSAI that is the NSSAA target from among pieces of default S-NSSAI included in the subscription information.

In operation 224, the AMF 120 may complete the NSSAA procedure for each piece of S-NSSAI, which started in operation 222. The AMF 120 may store, as UE context, an NSSAA result (for example, a success or failure) for each piece of S-NSSAI.

In operation 226, the AMF 120 may determine the allowed NSSAI, based on the NSSAA result obtained in operation 224.

According to an embodiment, when the empty allowed NSSAI has been transmitted in operation 220, and the result of performing the NSSAA procedure on the all pieces of S-NSSAI included in the pending NSSAI in operation 224 is authentication failure, the AMF 120 may include, to the allowed NSSAI, from among the pieces of default S-NSSAI, S-NSSAI that is not the NSSAA target and/or S-NSSAI of which NSSAA is successful from among default S-NSSAI that is the NSSAA target. According to an embodiment, the AMF 120 may determine the S-NSSAI of which the NSSAA is successful from among the pieces of default S-NSSAI, based on the NSSAA result (for example, a success or failure) stored in operation 224 as the UE context. When there is default S-NSSAI to be provided as the allowed NSSAI, the AMF 120 may transmit, to the terminal 100, a UE configuration update command message in operation 228a. The UE configuration update command message may include the allowed NSSAI. Upon receiving the UE configuration update command message, the terminal 100 may use the S-NSSAI included in the allowed NSSAI included in the UE configuration update command message.

According to an embodiment, when the empty allowed NSSAI has been transmitted in operation 220, the result of performing the NSSAA procedure on the all pieces of S-NSSAI included in the pending NSSAI in operation 224 is authentication failure, and there is no S-NSSAI that is not the NSSAA target from among the pieces of default S-NSSAI or no S-NSSAI of which the NSSAA is successful from among the pieces of default S-NSSAI that is the NSSAA target, the AMF 120 may determine that there is no network slice providable to the terminal 100. According to an embodiment, the AMF 120 may determine S-NSSAI of which the NSSAA has failed from among the pieces of default S-NSSAI, based on the NSSAA result (for example, a success or failure) stored in operation 224 as the UE context. As such, when there is no default S-NSSAI to be provided as the allowed NSSAI, the AMF 120 may transmit a network-initiated deregistration message or registration reject message to the terminal 100 in operation 228b. Upon receiving the network-initiated deregistration message or registration reject message, the terminal 100 may determine that there is no network slice currently available.

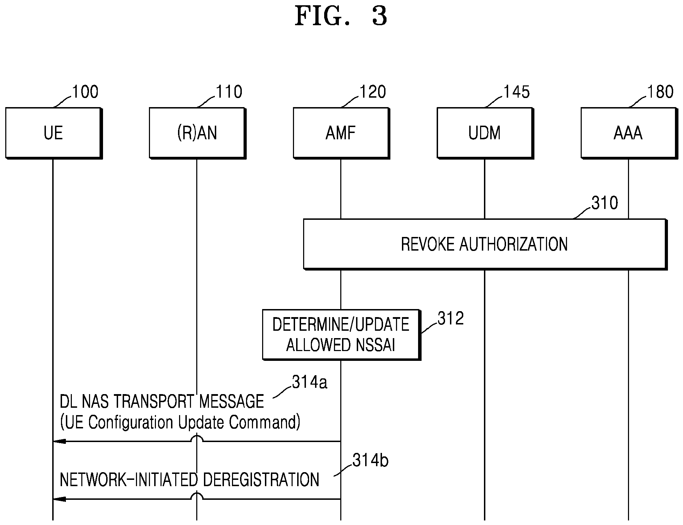

FIG. 3 is a sequence diagram showing a reauthentication procedure according to an embodiment of the disclosure.

Referring to FIG. 3, in operation 310, the AMF 120 or the server of AAA 180, according to an embodiment of the disclosure, may revoke an authentication success of the NSSAA performed in operation 224 of FIG. 2. The AMF 120 may update the NSSAA result stored as the UE context. For example, when authentication is revoked in operation 310 for the S-NSSAI of which the NSSAA result is stored as a success as authentication was successful in operation 224, the NSSAA result of the S-NSSAI stored as the success may be updated to failure.

In operation 312, the AMF 120 may determine the allowed NSSAI based on the NSSAA result of which the authentication is revoked in operation 310.

According to an embodiment, when NSSAA authentication of all pieces of S-NSSAI included in the existing allowed NSSAI is revoked, the AMF 120 may include, to the allowed NSSAI, from among the pieces of default S-NSSAI, S-NSSAI that is not the NSSAA target and/or S-NSSAI of which NSSAA is successful from among default S-NSSAI that is the NSSAA target. According to an embodiment, the AMF 120 may determine the S-NSSAI of which the NSSAA is successful from among the pieces of default S-NSSAI, based on the NSSAA result (for example, a success or failure) stored in operation 224 or 310 as the UE context. When there is default S-NSSAI to be provided as the allowed NSSAI, the AMF 120 may transmit, to the terminal 100, the UE configuration update command message in operation 314a. The UE configuration update command message may include the allowed NSSAI. Upon receiving the UE configuration update command message, the terminal 100 may use the S-NSSAI included in the allowed NSSAI included in the UE configuration update command message.

According to an embodiment, when the NSSAA authentication of all the pieces of S-NSSAI included in the existing allowed NSSAI is revoked, and there is no S-NSSAI that is not the NSSAA target from among the pieces of default S-NSSAI or no S-NSSAI of which the NSSAA is successful from among the pieces of default S-NSSAI that is the NSSAA target, the AMF 120 may determine that there is no network slice providable to the terminal 100. According to an embodiment, the AMF 120 may determine the S-NSSAI of which the NSSAA has failed from among the pieces of default S-NSSAI, based on the NSSAA result (for example, a success or failure) stored in operation 224 or 310 as the UE context. As such, when there is no default S-NSSAI to be provided as the allowed NSSAI, the AMF 120 may transmit the network-initiated deregistration message to the terminal 100 in operation 314b. Upon receiving the network-initiated deregistration message, the terminal 100 may determine that there is no network slice currently available.

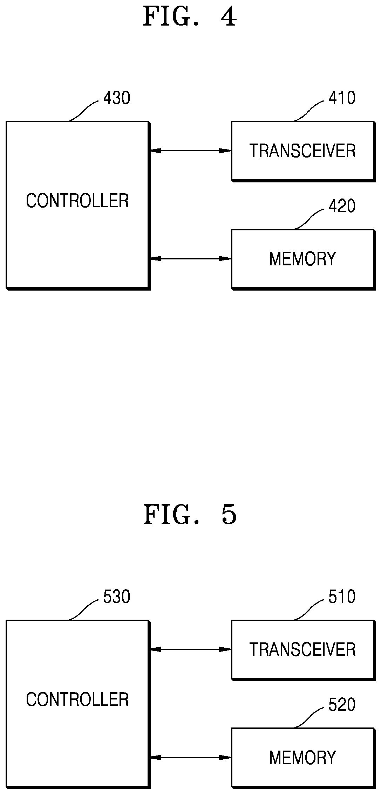

FIG. 4 is a diagram showing a configuration of a terminal, according to an embodiment of the disclosure.

As shown in FIG. 4, the terminal of the disclosure may include a transceiver 410, a memory 420, and a processor 430. The processor 430, the transceiver 410, and the memory 420 of the terminal may operate according to the communication method of the terminal described above. However, the components of the terminal are not limited thereto. For example, the terminal may include more or fewer components than those described above. In addition, the processor 430, the transceiver 410, and the memory 420 may be implemented in a single chip. The processor 430 may include at least one or more processors.

The transceiver 410 is a collective term of a transmitter of the terminal and a receiver of the terminal, and may transmit or receive a signal to or from a base station. The signal transmitted or received to or from the base station may include control information and data. In this regard, the transceiver 410 may include an RF transmitter for up-converting the frequency of a signal to be transmitted and amplifying the signal and an RF receiver for low-noise amplifying a received signal and down-converting the frequency of the received signal. This is merely an example, and the components of the transceiver 410 are not limited to the RF transmitter and RF receiver.

Also, the transceiver 410 may receive a signal through a wireless channel and output the same to the processor 430, and transmit a signal output from the processor 430 through the wireless channel.

The memory 420 may store a program and data required for operations of the terminal. Also, the memory 420 may store control information or data included in a signal obtained by the terminal. The memory 420 may be a storage medium, such as ROM, RAM, a hard disk, a CD-ROM, or a DVD, or a combination of storage media.

The processor 430 may control a series of processes for the terminal to operate according to the embodiments of the disclosure. For example, the processor 430 may receive a control signal and a data signal through the transceiver 410 and process the received control signal and data signal. Also, the processor 430 may transmit the processed control signal and data signal through the transceiver 410.

FIG. 5 is a diagram showing a configuration of a network entity, according to an embodiment of the disclosure.

As shown in FIG. 5, the network entity of the disclosure may include a transceiver 510, a memory 520, and a processor 530. The processor 530, the transceiver 510, and the memory 520 of the network entity may operate according to a communication method of the network entity described above. However, the components of the network entity are not limited thereto. For example, the network entity may include more or fewer components than those described above. In addition, the processor 530, the transceiver 510, and the memory 520 may be implemented in a single chip. The processor 530 may include at least one or more processors.

According to an embodiment, the network entity may include the (R)AN 110, the AMF 120, the UPF 130, the PCFs 140 and 141, the UDM 145, the NSSF 160, the AUSF 165, the UDR 150, the AAA 180, and the AF 170. However, this is merely an example and the network entity may include various entities.

The transceiver 510 is a collective term of a transmitter of the network entity and a receiver of the network entity, and may transmit or receive a signal to or from a base station. The signal transmitted or received to or from the base station may include control information and data. In this regard, the transceiver 510 may include an RF transmitter for up-converting the frequency of a signal to be transmitted and amplifying the signal and an RF receiver for low-noise amplifying a received signal and down-converting the frequency of the received signal. This is merely an example, and the components of the transceiver 510 are not limited to the RF transmitter and RF receiver.

Also, the transceiver 510 may receive a signal through a wireless channel and output the same to the processor 530, and transmit a signal output from the processor 530 through the wireless channel.

The memory 520 may store a program and data required for operations of the network entity. Also, the memory 520 may store control information or data included in a signal obtained by the network entity. The memory 520 may include a storage medium such as a read only memory (ROM), a random-access memory (RAM), a hard disk, a compact disk ROM (CD-ROM), and a digital versatile disc (DVD), or a combination of storage mediums.

The processor 530 may control a series of processes for the network entity to operate according to the embodiments of the disclosure. For example, the processor 530 may receive a control signal and a data signal through the transceiver 510 and process the received control signal and data signal. Also, the processor 530 may transmit the processed control signal and data signal through the transceiver 510.

According to an embodiment of the disclosure, a method by which an access and mobility management function (AMF) provides an authenticated network slice in a wireless communication system, includes receiving, from a terminal, a message including requested network slice selection assistance information (NSSAI) including information about a network slice to be accessed by the terminal, receiving, from unified data management (UDM), subscription information of the terminal including at least one of pieces of S-NSSAI subscribed by the terminal 100, an indication indicating whether S-NSSAI subscribed by the terminal is default S-NSSAI, or an indication indicating whether the S-NSSAI subscribed by the terminal is a network slice-specific authentication and authorization (NSSAA) target, performing an NSSAA procedure based on the requested NSSAI and the subscription information of the terminal, and transmitting, according to a result of performing the NSSAA procedure, a UE configuration update command message including the default S-NSSAI to be provided, a network-initiated deregistration message, or a registration reject message.

According to an embodiment of the disclosure, provided is a method performed by an access and mobility management function (AMF) in a wireless communication system. The method may include: receiving, from a terminal through a base station, a request for one or more first network slices to be accessed by the terminal; receiving, from unified data management (UDM), terminal subscription information including information about one or more third network slices subscribed as a default; identifying, based on the request and the terminal subscription information, whether one or more second network slices subscribed by the terminal included in the one or more first network slices are an authentication procedure target; when all of the one or more second network slices are the authentication procedure target, adding all of the one or more second network slices to a pending network slice list; performing an authentication procedure based on at least one of the pending network slice list or the one or more third network slices; determining, based on a result of the authentication procedure, one or more network slices available to the terminal; and transmitting, to the terminal, information about the one or more network slices available to the terminal.

According to an embodiment, the method may further include transmitting, to the terminal, information about the pending network slice list and an indication indicating that all of the one or more second network slices are the authentication procedure target.

According to an embodiment, the performing of the authentication procedure may include performing the authentication procedure on one or more network slices that are the authentication procedure target from among the one or more second network slices included in the pending network slice list.

According to an embodiment, the performing of the authentication procedure may include performing the authentication procedure on one or more network slices that are the authentication procedure target from among the one or more third network slices.

According to an embodiment, the determining of the one or more network slices available to the terminal may include, when the authentication procedure on all of one or more network slices that are the authentication procedure target from among the one or more second network slices included in the pending network slice list has failed, determining, as the one or more network slices available to the terminal, one or more network slices that are not the authentication procedure target from among the one or more third network slices.

According to an embodiment, the determining of the one or more network slices available to the terminal may include determining, as the one or more network slices available to the terminal, one or more network slices on which the authentication procedure has been successfully performed, from among the one or more third network slices.

According to an embodiment, the method may further include, when the authentication procedure on all of one or more network slices that are the authentication procedure target from among the one or more second network slices included in the pending network slice list has failed, all of the one or more third network slices are the authentication procedure target, and the authentication procedure on all of the one or more third network slices has failed, transmitting a registration rejection message to the terminal.

According to an embodiment of the disclosure, provided is a method performed by an access and mobility management function (AMF) in a wireless communication system. The method may include: receiving, from a terminal through a base station, a request for one or more first network slices to be accessed by the terminal; receiving, from unified data management (UDM), terminal subscription information including information about one or more second network slices subscribed as a default; performing an authentication procedure based on the request and the terminal subscription information; revoking the performed authentication procedure; and determining, based on a result of the revoked authentication procedure, one or more network slices available to the terminal.

According to an embodiment, the determining of the one or more network slices available to the terminal may include determining, as the one or more network slices available to the terminal, one or more network slices that are not an authentication procedure target from among the one or more second network slices.

According to an embodiment, the determining of the one or more network slices available to the terminal may include determining, as the one or more network slices available to the terminal, one or more network slices on which the authentication procedure has been successfully performed, from among the one or more second network slices.

According to an embodiment of the disclosure, provided is an access and mobility management function (AMF) in a wireless communication system. The AMF includes: a transceiver; and at least one processor configured to: receive, from a terminal through the transceiver and a base station, a request for one or more first network slices to be accessed by the terminal; receive, from unified data management (UDM) through the transceiver, terminal subscription information including information about one or more third network slices subscribed as a default; identify, based on the request and the terminal subscription information, whether one or more second network slices subscribed by the terminal included in the one or more first network slices are an authentication procedure target; when all of the one or more second network slices are the authentication procedure target, add all of the one or more second network slices to a pending network slice list; perform an authentication procedure based on at least one of the pending network slice list or the one or more third network slices; determine, based on a result of the authentication procedure, one or more network slices available to the terminal; and transmit, to the terminal through the transceiver, information about the one or more network slices available to the terminal.

According to an embodiment, the at least one processor may be further configured to transmit, to the terminal through the transceiver, information about the pending network slice list and an indication indicating that all of the one or more second network slices are the authentication procedure target.

According to an embodiment, the at least one processor may be further configured to perform the authentication procedure on one or more network slices that are the authentication procedure target from among the one or more second network slices included in the pending network slice list.

According to an embodiment, the at least one processor may be further configured to perform the authentication procedure on one or more network slices that are the authentication procedure target from among the one or more third network slices.

According to an embodiment, the at least one processor may be further configured to, when the authentication procedure on all of one or more network slices that are the authentication procedure target from among the one or more second network slices included in the pending network slice list has failed, determine, as the one or more network slices available to the terminal, one or more network slices that are not the authentication procedure target from among the one or more third network slices.

According to an embodiment, the at least one processor may be further configured to determine, as the one or more network slices available to the terminal, one or more network slices on which the authentication procedure has been successfully performed, from among the one or more third network slices.

According to an embodiment, the at least one processor may be further configured to, when the authentication procedure on all of one or more network slices that are the authentication procedure target from among the one or more second network slices included in the pending network slice list has failed, all of the one or more third network slices are the authentication procedure target, and the authentication procedure on all of the one or more third network slices has failed, transmit a registration rejection message to the terminal.

According to an embodiment of the disclosure, provided is an access and mobility management function (AMF) in a wireless communication system. The AMF includes: a transceiver; and at least one processor configured to: receive, from a terminal through the transceiver and a base station, a request for one or more first network slices to be accessed by the terminal; receive, from unified data management (UDM) through the transceiver, terminal subscription information including information about one or more third network slices subscribed as a default; perform an authentication procedure based on the request and the terminal subscription information; revoke the performed authentication procedure; and determine, based on a result of the revoked authentication procedure, one or more network slices available to the terminal.

According to an embodiment, the at least one processor may be further configured to determine, as the one or more network slices available to the terminal, one or more network slices that are not an authentication procedure target from among the one or more second network slices.

According to an embodiment, the at least one processor may be further configured to determine, as the one or more network slices available to the terminal, one or more network slices on which the authentication procedure has been successfully performed, from among the one or more second network slices.

Methods according to the claims of the disclosure or the embodiments described in the specification may be implemented in hardware, software, or a combination of hardware and software.

When the methods are implemented in software, a computer-readable recording medium or computer program product having one or more programs (software modules) recorded thereon may be provided. The one or more programs recorded on the computer-readable recording medium or computer program product are configured to be executable by one or more processors in a device. The one or more programs include instructions directing the electronic device to execute the methods according to the embodiments of the disclosure as described in the claims and the specification.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in memory including a combination of some or all of the above-mentioned storage media. A plurality of such memories may be included.

In addition, the programs may be stored in an attachable storage device accessible through any or a combination of communication networks such as the Internet, an intranet, a local area network (LAN), a wide LAN (WLAN), and a storage area network (SAN). The storage device may be connected through an external port to an apparatus according to the embodiments of the disclosure. Another storage device on the communication network may also be connected to the apparatus performing the embodiments of the disclosure.

In the afore-described embodiments of the disclosure, elements included in the disclosure are expressed in a singular or plural form according to specific embodiments. However, the singular or plural form is appropriately selected for convenience of explanation and the disclosure is not limited thereto. As such, an element expressed in a plural form may also be configured as a single element, and an element expressed in a singular form may also be configured as plural elements.

Meanwhile, the embodiments described with reference to the present specification and the drawings are merely illustrative of specific examples to easily facilitate description and understanding of the disclosure, and are not intended to limit the scope of the disclosure. In other words, it will be apparent to one of ordinary skill in the art that other modifications based on the technical ideas of the disclosure are feasible. Also, the embodiments may be combined with each other as required. For example, a portion of one embodiment of the disclosure and a portion of another embodiment of the disclosure may be combined with each other. In addition, modified examples of the embodiments based on the technical ideas of the embodiments may be implemented in other systems, such as LTE systems, 5G or NR communication systems.

## Claims

1. A method performed by an access and mobility management function (AMF) in a wireless communication system, the method comprising:
receiving, from a terminal through a base station, a request for one or more first network slices to be accessed by the terminal;
receiving, from unified data management (UDM), terminal subscription information including information about one or more third network slices subscribed as a default;
identifying, based on the request and the terminal subscription information, whether one or more second network slices subscribed by the terminal included in the one or more first network slices are an authentication procedure target;
when all of the one or more second network slices are the authentication procedure target, adding all of the one or more second network slices to a pending network slice list;
performing an authentication procedure based on at least one of the pending network slice list or the one or more third network slices;
determining, based on a result of the authentication procedure, one or more network slices available to the terminal; and
transmitting, to the terminal, information about the one or more network slices available to the terminal.

2. The method of claim 1, further comprising transmitting, to the terminal, information about the pending network slice list and an indication indicating that all of the one or more second network slices are the authentication procedure target.

3. The method of claim 1, wherein the performing of the authentication procedure comprises performing the authentication procedure on one or more network slices that are the authentication procedure target from among the one or more second network slices included in the pending network slice list.

4. The method of claim 1, wherein the performing of the authentication procedure comprises performing the authentication procedure on one or more network slices that are the authentication procedure target from among the one or more third network slices.

5. The method of claim 1, wherein the determining of the one or more network slices available to the terminal comprises, when the authentication procedure on all of one or more network slices that are the authentication procedure target from among the one or more second network slices included in the pending network slice list has failed, determining, as the one or more network slices available to the terminal, one or more network slices that are not the authentication procedure target from among the one or more third network slices.

6. The method of claim 5, wherein the determining of the one or more network slices available to the terminal comprises determining, as the one or more network slices available to the terminal, one or more network slices on which the authentication procedure has been successfully performed, from among the one or more third network slices.

7. The method of claim 1, further comprising, when the authentication procedure on all of one or more network slices that are the authentication procedure target from among the one or more second network slices included in the pending network slice list has failed, all of the one or more third network slices are the authentication procedure target, and the authentication procedure on all of the one or more third network slices has failed, transmitting a registration rejection message to the terminal.

8. A method performed by an access and mobility management function (AMF) in a wireless communication system, the method comprising:
receiving, from a terminal through a base station, a request for one or more first network slices to be accessed by the terminal;
receiving, from unified data management (UDM), terminal subscription information including information about one or more second network slices subscribed as a default;
performing an authentication procedure based on the request and the terminal subscription information;
revoking the performed authentication procedure; and
determining, based on a result of the revoked authentication procedure, one or more network slices available to the terminal.

9. The method of claim 8, wherein the determining of the one or more network slices available to the terminal comprises determining, as the one or more network slices available to the terminal, one or more network slices that are not an authentication procedure target from among the one or more second network slices.

10. The method of claim 8, wherein the determining of the one or more network slices available to the terminal comprises determining, as the one or more network slices available to the terminal, one or more network slices on which the authentication procedure has been successfully performed, from among the one or more second network slices.

11. An access and mobility management function (AMF) in a wireless communication system, the AMF comprising:
a transceiver; and
at least one processor configured to:
receive, from a terminal through the transceiver and a base station, a request for one or more first network slices to be accessed by the terminal;
receive, from unified data management (UDM) through the transceiver, terminal subscription information including information about one or more third network slices subscribed as a default;
identify, based on the request and the terminal subscription information, whether one or more second network slices subscribed by the terminal included in the one or more first network slices are an authentication procedure target;
when all of the one or more second network slices are the authentication procedure target, add all of the one or more second network slices to a pending network slice list;
perform an authentication procedure based on at least one of the pending network slice list or the one or more third network slices;
determine, based on a result of the authentication procedure, one or more network slices available to the terminal; and
transmit, to the terminal through the transceiver, information about the one or more network slices available to the terminal.

12. The AMF of claim 11, wherein the at least one processor is further configured to transmit, to the terminal through the transceiver, information about the pending network slice list and an indication indicating that all of the one or more second network slices are the authentication procedure target.

13. The AMF of claim 11, wherein the at least one processor is further configured to perform the authentication procedure on one or more network slices that are the authentication procedure target from among the one or more second network slices included in the pending network slice list.

14. An access and mobility management function (AMF) in a wireless communication system, the AMF comprising:
a transceiver; and
at least one processor configured to:
receive, from a terminal through the transceiver and a base station, a request for one or more first network slices to be accessed by the terminal;
receive, from unified data management (UDM) through the transceiver, terminal subscription information including information about one or more third network slices subscribed as a default;
perform an authentication procedure based on the request and the terminal subscription information;
revoke the performed authentication procedure; and
determine, based on a result of the revoked authentication procedure, one or more network slices available to the terminal.

15. The AMF of claim 14, wherein the at least one processor is further configured to determine, as the one or more network slices available to the terminal, one or more network slices that are not an authentication procedure target from among the one or more second network slices.
